# EUROPEAN PATENT SPECIFICATION

(11) **EP 4 099 236 B1**
(45) Date of publication and mention of the grant of the patent: **07.10.2026**
(21) Application number: 21177671.1
(22) Date of filing: 04.06.2021
(51) Int. Cl.: G06Q 10/0633, G06Q 10/067, G06Q 10/00, G06Q 10/06, G06Q 10/10, G06Q 50/08

(54) **METHOD AND SOFTWARE PROGRAM PRODUCT FOR EVALUATION OF NEEDS IN CONSTRUCTION PROJECTS**
VERFAHREN UND SOFTWAREPROGRAMMPRODUKT ZUR BEWERTUNG DER ANFORDERUNGEN IN KONSTRUKTIONSPROJEKTEN
PROCÉDÉ ET PRODUIT-PROGRAMME LOGICIEL D'ÉVALUATION DES BESOINS DANS DES PROJETS DE CONSTRUCTION

(43) Date of publication of application: 07.12.2022
(73) Proprietor: Quanttos Oy, 90130 Oulu (FI)
(72) Inventor: Räihä, Pentti, 91210 Jakkukylä (FI)
(74) Representative: Boco IP Oy Ab

(56) References cited:
- CN-A- 110 765 511
- JP-A- 2006 209 477
- US-A1- 2011 054 652
- US-A1- 2020 175 211
- US-B1- 6 922 701

## Description

### TECHNICAL FIELD

The invention is concerned with a computer-implemented method and a software program product for evaluation of details of one or more objects of a construction project.

### BACKGROUND

A construction project entails different stages, such as initiation, planning, implementation, performance, monitoring, and closing. It involves the choice of technology, the definition of work tasks, the estimation of the required resources and the durations for individual tasks, and the identification of any other interactions among the different work tasks. A good construction plan is the basis for developing the budget and the schedule for construction work and includes the concept of a project and a schematic design.

The schematic design is a sketch in the form of a construction drawing or image that will show the space as well as materials, colours, and even textures. The sketch will be used to evaluate the equipment and material needed as well as the cost for them. Contract documents are drawn up based on final drawings and specifications.

There are some principles for a manual calculation of the amount of material and costs for planning, calculation and purchase of construction material. The consumption of material is the amount of material needed to perform a project.

The final documents and drawings for a given construction project are the base for the calculation. A drawing includes many construction elements, which are named and a scale for their dimensions have to be determined.

Older methods are based on drawings on paper, calculators, and scaling rulers for manual calculation. The calculation models are very often based on Microsoft's excel.

Nowadays, the construction branch is striving to become more digitalized and software has been developed to facilitate the planning work in order to avoid time consuming old methods.

Examples of more modern digitized methods exist, such as those presented in US patent application 2020/0175211A1, which discloses a method of automatically recognizing and classifying design information in an imaged piping and instrumentation diagram.

KR101224627B1 discloses a method for calculating the quantity and design of a construction structure by using Building Information Modeling (BIM). The quantity of structures is calculated in a design step, and the expected quantity of the structures is estimated by calculating the quantity of the structures by inputting structure analysis and design information to the BIM structure.

KR20120109677A discloses a system for material calculation using one or more drawing files. The system analyzes a text within the inputted design drawing. The system generates a finishing material list. The system calculates each construction surface or length and calculates finishing material quantity.

US6922701 B1 discloses a method for generating a post-CAD, CAD-independent profile of a building for building and remodeling projects.

JP2006209477 A discloses a building total estimation system and method.

US patent application 2011/064652 A1 discloses a building construction software and system.

US patent application 2020/175211 A1 discloses a method of automatically recognizing and classifying design information in imaged P&ID drawing and automatically creating an intelligent P&ID drawing.

CN1107655511 discloses a BIM-based method for prefabricated interior decoration, in which building drawings are imported and building components are selected from a component library for evaluation.

US2020175211 discloses computer-assisted object recognition in image data, including training of a software system to recognise objects.

The object of the invention is a versatile evaluation method for getting information of material quantities and costs as well as other details for a construction project, and which easily can be adapted for different kinds of projects where material and other objects are used.

### SUMMARY

The invention provides a computer-implemented method according to claim 1 for evaluation of details of one or more objects of a construction project by means of a software program product executed in a computer.

The computer program product to be used in the method of the invention comprises instructions to cause performing steps according to claim 24 when run in a computer.

The preferable embodiments of the invention have the characteristics of the dependent clams.

The construction project can e.g. be a building, a construction element, an electrical implementation, such as a wiring and/or connection design, or a Heating, Ventilation, and Air Conditioning (HVAC) implementation.

The object in such a construction project can be a space, an element, a construction part or an entity of the construction part.

When the construction project is a building, the object can e.g. be an interior wall, an exterior wall, a door, a window, a floor, a ceiling, a roof, a façade, a foundation, or a plot. When the object is an interior wall, its components might be e.g. material layers, studs, upper supports, and lower supports. Additional dimension information can be informed to the software program product, such as dimensions of sections to be decreased from the calculations of material for a wall due to windows or doors in a wall.

When the construction project is an electrical implementation, such as a wiring and/or connection design, the objects can be cables, sockets, switches, luminaires, a power room, a radiator, an electric supply cable, and the component can be connecting means.

When the construction project is a Heating, Ventilation, and Air Conditioning (HVAC) implementation, the objects can be ventilation channels, valves, soil pipes, water closet pans, taps, basins, domestic water pipes for warm or cold water, heater pipes or, or corner pieces and the components e.g. fastening means.

Said detail to be evaluated for the object can be a dimension, an area, a volume, an amount, a number, a length, and/or a height for the whole object of for a component of the object, whereby the evaluation includes a measurement and/or a calculation.

The measurement and/or calculation of the object gives an evaluation of the need of the amount of material(s) needed for the object and/or its components to be realized. Said evaluation can also include a calculation of the dimensions and/or number of objects or its components.

Thus, the defined components constitute material information and assembly information, whereby the assembly information includes dimensional information and dimensional relations of e.g. material layers as/or components constituting an object and possibly, how the components are assembled together. The definitions of components for a given object are stored in a database as an object assembly or package, whereby the software program product evaluates the details of all the components of the assembly or package of a selected or of an indicated object.

The software program product can collect all the objects of the indicated or selected type from the image that can be a drawing and gives the result as an evaluation as a sum of the evaluations of each object or separately for each object.

The result of the calculations and measurements is shown on a display of a computer as information of the number of objects needed, the dimensions of the objects needed, material amounts needed for the objects and/or the costs of individual objects and of a sum of objects. The cost information is either calculated by the software program product or by an other program on the basis of the evaluation result performed by the software program product and/or on the basis of evaluated working hours and other work or general costs.

There are usually many objects and details of them on the image or drawing to be evaluated so the user can repeat the step of selecting an object to be evaluated for other details in the image or drawing, whereby the result can be shown for all the selected objects as a combined result.

The user can perform the indication of the object e.g. by pointing or clicking on a symbol or its site on the image or e.g. by dragging over or clicking with the mouse of the computer.

When in the method, the user is indicating, e.g. by pointing on or clicking on a certain object on the image or drawing, the user can give dimensional and material assembly information of components constituting the object either by inputting it in connection with the method in use or by fetching it from a database or by letting the software program product fetch it from the database, wherein this information is previously stored or then by telling the software product where to find the information in the database.

The user can in this way train the software program in connection with each use of the method to gradually learn to combine an object, which is pointed to on the drawing, with given components or with a given assembly or package, by itself.

The software program product can learn to recognize an object on an image by pattern recognition, on the basis of a description of an object on the image or drawing by means of a line type, element, item, symbol, icon, font, geometric or other form, text, letter, word, number and/or the like. The software program product can thus learn to fetch upon training the component constituting the object from the database after having recognized the object as a result of pattern recognition of the object how it is illustrated in the drawing. The training of the software program continues to take place in each use of the method.

The drawing can be constructed as a two-dimensional (2D) image, such as a Computer Aided Design (CAD) image, a DWG drawing, a Portable Document Format (PDF) image, a Graphics Interchange Format (GIF) image, or a Joint Photographic Group (JPG) image. In some embodiments, the drawing is constructed as a three-dimensional (3D) image. Height information of an object is informed to the software program product when the drawing is constructed as a two-dimensional (2D) image.

A still further function of the software program product is that it continuously collects data of evaluation events with different users and is able to compare the results of similar construction projects and give the outcome of the comparations together with the result to a user.

With this function, the user can e.g. then see if the results of a given evaluation is in line with similar constructions projects with respect to e.g buildings of the same size. If for example the costs or material amounts for a given construction project are considerably higher or lower than for similar construction projects, the user might have forgotten to evaluate something, evaluated something twice, or estimated the working hours incorrectly. The overall plan of the construction project might also be necessary to improve of these reasons. This is valuable feedback for getting useful results and enables the user to e.g. corrects mistakes or improve the plan for the construction project.

In embodiments, wherein this function is in use, the user usually has to enter background or general data of the construction project for the comparison in addition to requesting an object for the evaluation. Optionally, background data might include general statistical information. The software program product might also have access to statistical information informed in advance.

The comparisons are performed on the basis of given factors and characteristics of the construction products which can be asked by the user in connection with the evaluation process, such as in the beginning of the process when the user entries data or indicates an object. The user is e.g. requested by the software program product to fill fields in a form or a template with requested data.

When all the calculations and measurements have been done, the user can make use of the results presented by the software program product by ordering the products needed in a correct amount and number to the worksite and by attaching the list of materials and products needed to an offer to a client.

The invention decreases the time for making offers and for calculation the profitability in connection of e.g. material consumption and costs.

In the following, the invention is described by means of some embodiment examples in connection with different types of construction projects. The invention is not restricted to the details of the examples.

### FIGURES

Figure 1 is a part of a floor plan of a flat of a building
Figure 2 shows an electrical wiring in a room of a building
Figure 3 is a part of a HVAC implementation
Figure 4 is a signal diagram of the method of the invention

### DETAILED DESCRIPTION

### EXAMPLE 1 (BUILDING)

In the first example, it is assumed that the construction project is a building.

For the purpose of construction of a building, a drawing is prepared comprising all the details for constructing the intended building. The drawing can be prepared by the user himself or by a third party. Instead of a drawing, an image of the construction project can be used.

Construction drawings are used to construct the building, so it is important that they contain everything the contractor needs to build. This will include information such as structural layout or grid, dimensions, and a clear labelling of elements. Thus, the drawing usually comprises e.g. walls, doors, windows, frames for those and generally elements needed for the construction. These are usually labelled with dimensions, architectural features, notes, details and other graphic information. These drawings will show things like the floor plan, exterior and interior elevations, and a lot of details showing exactly how the building should be put together. The construction drawings can suitably be prepared by the contractor and done for construction purposes. The construction drawings usually include construction finishing drawings including every type of components of the building, such as painting colors, flooring pattern, plastering texture, elevation design, and false ceiling shapes.

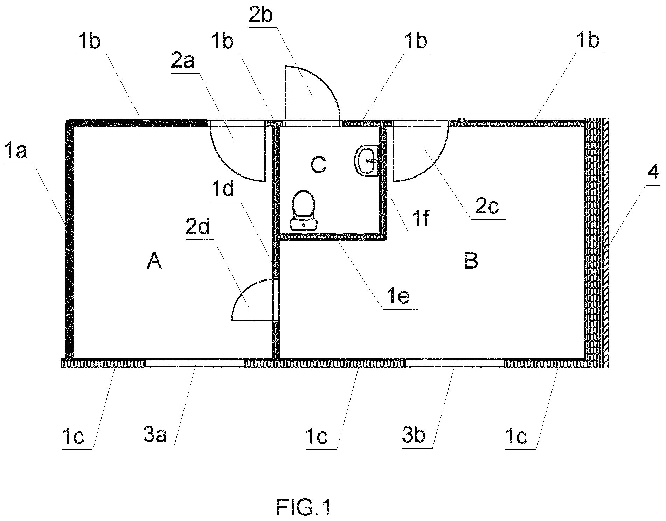

Figure 1 shows a part of a flat, which is simplified for illustrative purposes.

When in the method of the invention, such a construction drawing is put into the software program used in the invention, a dimension line, such as the height and/or length of the building, is referred to for comparison by pointing on the drawing and combining it with number information of the height and/or length, to inform the program the correct dimensional scale thereby setting the drawing into a scale that corresponds to the reality. The dimension line (not shown in figure 1) is thus a measurement line and with dimensional information the measurements done will have the correct values in desired dimensional units.

In this example, it is assumed that the user uses the construction drawing of figure 1 in an image format and puts it into the software program in a way to be read by the software program in order to figure out the material amount for given objects of the drawing, which in this example are interior walls dividing or separating rooms.

In this example, the user intends to calculate material needs for the interior walls of a flat of the building. Figure 1 is a part of a floor plan for the building.

The user has the knowledge of what such an interior wall consists of an defines an object package for an interior wall assembly. The object package contains information of what materials and how much work is needed for constructing the interior walls in the project. Since the drawing is in the form of a two-dimensional image, the user informs the program the height of the room of the building, where the interior wall is.

Also, the component in the form of material layers building up that the interior wall is informed to the program. In this example they consist of
- a wool layer, the length of which can be evaluated from the informed dimensional scale and the thickness of which is not relevant to be considered in this context or has been informed or stored in advance, whereby the software program can evaluate the needed amount of wool by measuring in meters multiplied with a factor giving the room height,
- a Gyproc layer (a type of plaster board), the length of which can be evaluated from the informed dimensional scale and the thickness of which is not relevant to be considered in this context or is informed or stored in advance, whereby the software program can evaluate the needed amount of Gyproc by measuring in meter multiplied with a factor giving the room height,
- poles, the dimensions of which is partly informed and partly evaluated, whereby the software program can evaluate the needed amount of pole material by measuring in meter and then also calculate the number of poles needed by multiplying the measured amount of pole material by a factor of 1,66, since the poles are placed on a distance of 60 cm from each other, so the factor = 1:0,6 = 1,66 poles/m,
- upper and lower supports, whereby the software program can evaluate the needed amount of pole material by measuring in meter multiplied with a factor of two, since there are supports both up and down.

The object package is stored in a database to be fetched by the software program or it is informed to the software program at the use of the method to be directly interpreted by the software program.

In the floor plan of figure 1, A and B are rooms and C is a bathroom, reference numbers 1a - 1f represent interior walls, reference numbers 2a - 2d represent doors, reference numbers 3a and 3b represent windows and reference number 4 represent an exterior wall.

Next, the user selects one interior wall 1a to be evaluated by clicking on the object representing the interior wall 1a on the drawing for which details shall be calculated and evaluated by the software program product.

Since there are many such interior walls on the drawing, the other ones being 1b - 1f, the user can point out each of them or alternatively, the software program product can in some embodiments be able to collect them by itself so that all of them are evaluated as a sum. Instead of clicking on the object it can be painted over by dragging with a mouse, which is indicated by a darker tone in figure 1 for 1a compared to the other interior walls 1b - 1f. The term pointing out is intended to cover either one of these methods.

The software program then calculates the amount of material needed separately for each interior wall by means of the factors with respect to each material component of the interior wall, the interior wall being informed as a package to the software program product. The package can also be stored in advance in a database, from where it is fetched by the program.

If there are areas of the interior wall with constructions that do not contain any material component features of the above type, such as doors 2a - 2c or windows 3a and 3b, the need of material evaluated can be decreased as a subtraction directly on the drawing as a function. Thus, the windows 3a - 3b should be subtracted for the interior wall 1c and the doors 2a - 2c from the interior wall 1b and the door 2d from the interior wall 1d.

In figure 1, each object representing an interior wall is presented by a type of zig-zag line with rounded turns. The software program can be trained to recognize the zig-zag line to represent an interior wall and can be taught to fetch the components of an interior wall, or the assembly or package constituting an interior wall, for which the material need should be calculated.

When the interior walls have been measured and the need of material evaluated, the amount of material needed for each interior wall is transferred to a list that gives the total amount of material. This list can be received from the software program as such and it can also be made use of e.g. in an excel file.

The software program shows a result of the evaluations for the user on the display on the computer of the user.

The software program allows the user to check the site of the interior wall measured, measurement data, etc. and the input data on which the results are based on can be changed or supplemented afterwards to thereby give updated results with no need to repeat all the measurements. For example, only the object package needs to be updated. The drawing itself can also be updated. For example, interior walls can be removed or added.

Cost information can be included in the results. The cost information can be calculated by the software program product itself or by an other program on the basis of the calculation result performed by the software program product and also on the basis of evaluated working hours and other costs. The other program might be a JCAD program.

The cost calculation can be implemented as an own calculation inside the material evaluation calculation. When used for the first time, the type of costs has to be defined, being at least two, such as the price per square meter material and the price per working hour. As an additional cost type, a value for an effective working hour is also defined, describing e.g. the number of hours needed to install one Gyproc board per square meter. if e.g. the value is 0,1 0,24h is needed to install a board of 2,4 m². So, the cost calculation has to be preceded by defining such unit prices. In calculations to follow, everything does not need to be defined again and the values to be defined decreases all the time with each or almost each use. The cost calculation program will gradually become automatized. The cost calculation program further usually includes individual social contributions etc.

The example was given for interior wall for illustrating purposes and naturally, the method works in the same way for other construction products and objects. Also, the list mentioned can be collected for different objects from the same drawing.

### EXAMPLE 2 (ELECTRICAL WIRING DESIGN)

In the second example, it is assumed that the construction project is an electrical wiring in a room of the building.

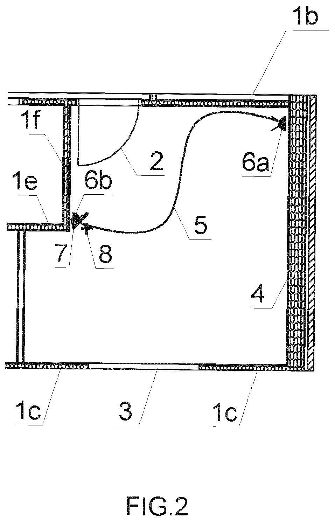

Figure 2 shows a part of a flat, which is simplified for illustrative purposes.

There is an electric cable 5 between two sockets 6a and 6b for electrifying the flat.

In this example, the user intends to calculate material needs for the cables of a flat of the building.

As in example 1, the user informs the dimensional scale of the drawing to the software program product and indicates the cable 5 as an object to be evaluated. The software program can combine the dimensional information received and evaluate the need in meters of the cable. The result is shown on a display on the computer of the user.

The user can evaluate the number of sockets needed by clicking on only one of them and as in the example the software program has been trained to recognize all similar objects, it can calculate the needed number (only two in this example).

The software program can fetch the object information package for sockets and cables from database and thus also evaluate the need for the number of e.g. connection means.

A further function of the software program product of the invention, which is illustrated in figure 2 (but can naturally be in use also e.g. in connection with example 1) is that a mark, in figure 2, the one having reference number 7, is shown in the image when an object has been indicated or alternatively evaluated. Another mark, such as a plus (+) having reference number 8 in figure 2 indicates that also components of the object have been evaluated. In one embodiment, the user can mark objects manually.

### EXAMPLE 3 (HVAC PLAN)

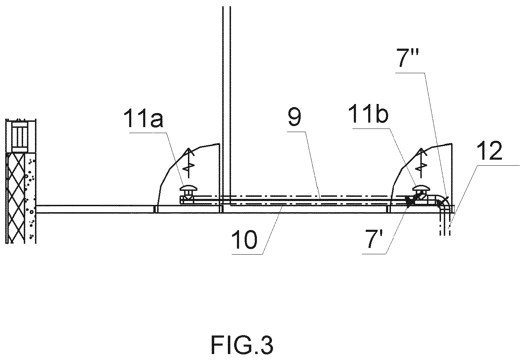

Figure 3 is a part of a Heating, Ventilation, and Air Conditioning (HVAC) plan.

In the third example, it is assumed that the construction project is a part of a HVAC plan in a room of the building.

Figure 3 shows a simplified part for illustrative purposes.

In this example, the user intends to calculate material needs for ventilation channels of a flat of the building.

There is a ventilation channel 9 that is indicated as an object in figure 3. The indication is shown with a line 10. The object is marked 7' as having been evaluated or selected. Other objects shown in figure 3 are valves 11a and 11b that can be indicated. A further object can be a corner piece 12, which also has been marked 7" for having been evaluated.

As in examples 1 and 2, the user informs the dimensional scale of the drawing to the software program product and indicates the ventilation channel 9 as an object to be evaluated. The software program can combine the dimensional information received and evaluate the need of material for the ventilation channel 9 and its components, i.e. such components that can not be seen in the drawings, such as fastening means. The result is shown om a display on the computer of the user.

The user can evaluate the number of sockets needed by clicking on only one of them and as in the example the software program has been trained to recognize all similar objects, it can calculate the needed number (only two in this example).

Examples 1 - 3 are only simplified examples to illustrate how the method of the invention works. it can naturally be used in any construction projects that can be presented in an image with one or more objects to be evaluated.

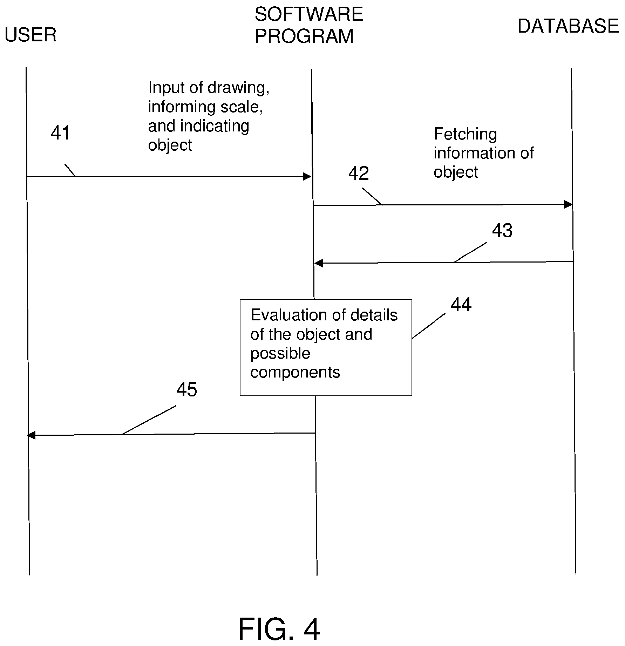

Figure 4 is a signal diagram of an example implementation of the method of the invention made for clarification.

In the method of the invention, a computer-implemented method is used for evaluation of details for one or more objects of a construction project by means of a software program product that is executed by a computer.

For the purpose of the construction project, a drawing is prepared comprising all the elements for constructing the intended construction. The drawing can be prepared by the user himself or by a third part. Instead of a drawing an image of the construction project can be used.

For the method, such a drawing or image is needed that comprise the elements, components or parts that constitute the project, which are presented as objects in the drawing.

The user uses a computer with a software program product connected to a database. The communication is within the computer between the user entries, the software program product and the database.

The evaluation starts with arrow 41 of figure 4 with the user putting in this drawing to the software program product to be read by the software program product and by informing the dimensional scale of the image to the software program product. The user also indicates an object in the image for the evaluation of the details of the object and optionally its possible components to be evaluated by the software program product. The indication of the object might take place separately and the image or drawing might have been put in earlier.

The object might be built up of components that possible have been informed earlier and been stored in a database. Therefore, when this is the case, shown by arrows 42 and 43, the software program fetches and receives information of the object indicated from the database.

The software program product then evaluates in step 44 the details of the indicated object or its components on the basis of the information of the object. Said detail to be evaluated for the object and maybe also its components can be information of a dimension, an area, a volume, an amount, a number, a length, and/or a height for the whole object of for a component of the object, whereby the evaluation result includes a measurement result and/or a calculation result. The result of the calculations comprises cost information on the basis of the calculation result for the details performed.

The result of the evaluation is then presented to the user on a display on a computer as shown by arrow 45.

## Claims

1. A computer-implemented method of evaluation of details for one or more objects of a construction project by means of a software program product executed by a computer, the method comprising the steps of
a) defining one or more components that constitute said one or more objects, the components of the object being targets of the evaluation and said definitions include material information and assembly information, the assembly information including dimensional relations and other information, and the definitions being stored in a database in the form of an assembly of the object,
b) providing an image of the construction project, the image illustrating said one or more objects, and training the software program product to be able to recognize one or more objects indicated on the image in order to fetch the evaluation targets of the object from the database.
c) a user of the software program product inputting (41) the image to be read by the software program product and informing the dimensional scale of the image to the software program product,
d) the user indicating (41) an object in the image for the evaluation of the details of the object or its components to be evaluated by the software program product, and
e) the software program product fetches (42, 43) the information of the components of an object from the database on the basis of the assembly stored and evaluates (44) the details of the indicated (10) object or its components on the basis of the definitions and shows (45) a result of the evaluation on a display on the computer,
**characterized in that**
the software program product finds and collects similar objects corresponding to the indicated (10) one from the image, whereby the result is shown for all the indicated objects as a combined result and/or separately for each object.

2. Method of claim 1, wherein the object is indicated by pointing or clicking on a symbol or its site on the image.

3. Method of claim 1, wherein the object is indicated showing its site on the image by dragging over or clicking with the mouse of the computer

4. Method of any of claims 1 - 3, wherein said object is a part of or the entire construction project, such as a space, an element, or a construction part.

5. Method of any of claims 1 - 4, wherein said detail to be evaluated for the object or its component is information of a dimension, an area, a volume, an amount, a number, a length, and/or a height for the whole object of for a component of the object, whereby the evaluation result includes a measurement result and/or a calculation result.

6. Method of claim 5, wherein the result of the calculations comprises cost information as calculated by the software program product or by an other program on the basis of the calculation result for the details performed by the software program product.

7. Method of claim 6, wherein the cost information is calculated on the basis of evaluated working hours and other work costs and possible other costs.

8. Method of any of claims 1 - 7, wherein the user repeats the step of indicating an object to be evaluated for other different and/or similar objects in the image, whereby the result is shown for all the indicated (10) objects as a combined result of all object and/or separately for each object.

9. Method of any of claims 1 - 8, wherein the software program product fetches the stored information of the definitions from the database on the basis of the indicated (10) object only, which definitions the software program product has learnt and/or trained to fetch on the basis of an earlier event, wherein the definitions have been informed to the software program product.

10. Method of any of claims 1 - 9, wherein the training or learning of the software program continues to take place in each use of the method, in which connection also updated content can be learnt.

11. Method of any of claims 1 - 10, wherein the software program product continuously collects data of evaluation events and compare the evaluation results of a given construction product with results of similar construction products, and presents the comparison result together with the evaluation result for the user.

12. Method of any of claims 1 - 11, wherein the software program product fetches the components constituting the object from the database after having recognized the object as a result of pattern recognition of a line type, element, item, symbol, icon, font, geometric or other form, text, letter, word, number and/or the like and or any combination or part of these.

13. Method of any of claims 1 - 12, wherein the image can be a drawing and/or constructed as a two-dimensional, 2D, image, such as a Computer Aided Design, CAD, image, a DWG drawing, such as a DXF drawing, a Portable Document Format, PDF, image, a Graphics Interchange Format, GIF, image or a Joint Photographic Group, JPG, image.

14. Method of any of claims 1 - 13, wherein the image is constructed as a three-dimensional (3D) image.

15. Method of claim 13, wherein, height information of an object is informed to the software program product when the image is constructed as a two-dimensional (2D) image.

16. Method of any of claims 1 - 15, wherein the construction project is a building, a construction element, or an electrical implementation, or a Heating, Ventilation, and Air Conditioning (HVAC) implementation.

17. Method of any of claims 1 - 16, wherein the construction project is a building, and the object is an interior wall (1a, 1b, 1c, 1s, 1e, 1f), an exterior wall (4), a door (2, 2a, 2b, 2c, 2d), a window (3, 3a, 3b), a floor, a ceiling, a roof, a façade, a foundation or a plot.

18. Method of claim 17, wherein the object is an interior wall, and the components are material layers, studs, upper supports, and lower supports.

19. Method of claim 17 or 18, wherein, additional dimension information is informed to the software program product, such as dimensions of sections to be decreased form the calculations of material for a wall (1a, 1b, 1c, 1d, 1e, 1f, 4) due to windows (3, 3a, 3b) or doors (2, 2a, 2b, 2c, 2d, 4) in a wall.

20. Method of any of claims 1 - 16, wherein the construction project is an electrical implementation in a building, whereby the object is a cable (5), a socket (6a, 6b), a switch, a luminaire, a power room, a radiator, an electric supply cable, and the components include connections means.

21. Method of any of claims 1 - 16, wherein the construction project is a Heating, Ventilation, and Air Conditioning (HVAC) plan, the object is a ventilation channel (9), a valve (11a, 11b), soil pipe, water closet pan, a tap, a basin, a domestic water pipe for warm or cold water, a heater pipe or a corner piece (12), and the component is a fastening means.

22. Method of any of claims 1 - 21, wherein evaluated objects are marked (7, 7', 7", 8) in the image by the software program product or by the user.

23. Method of any of claims 1 - 22, wherein the evaluation steps and results are stored in said database or another database to be studied later on.

24. A computer program product comprising instructions which, when the program is executed by a computer, cause the computer to carry out the method of any of claims 1 to 23.

## Patentansprüche

1. Computer-implementiertes Verfahren zur Auswertung von Details für ein oder mehrere Objekte eines Bauvorhabens mittels eines von einem Computer ausgeführten Softwareprogrammprodukts, wobei das Verfahren die Schritte umfasst:
a) Definieren einer oder mehrerer Komponenten, die das eine oder die mehreren Objekte darstellen, wobei es sich bei den Komponenten des Objekts um Ziele der Auswertung handelt und die Definitionen Materialinformationen und Baugruppeninformationen umfassen, wobei die Baugruppeninformationen Maßbeziehungen und andere Informationen umfassen und die Definitionen in einer Datenbank in Form einer Baugruppe des Objekts abgespeichert werden,
b) Bereitstellen eines Abbilds des Bauvorhabens, wobei das Abbild das eine oder die mehreren Objekte veranschaulicht, und Trainieren des Softwareprogrammprodukts dahingehend, dass es ein oder mehrere im Abbild angezeigte Objekte erkennen kann, um die Auswertungsziele des Objekts aus der Datenbank abzurufen,
c) durch einen Benutzer des Softwareprogrammprodukts, Eingeben (41) des vom Softwareprogrammprodukt zu lesenden Abbilds und Übermitteln des Maßstabs des Abbilds an das Softwareprogrammprodukt,
d) durch den Benutzer, Angeben (41) eines Objekts im Abbild für die Auswertung der Details des bzw. der vom Softwareprogrammprodukt auszuwertenden Objekts oder Komponenten des Objekts, und
e) durch das Softwareprogrammprodukt, Abrufen (42, 43) der Informationen zu den Komponenten eines Objekts anhand der gespeicherten Baugruppe aus der Datenbank und Auswerten (44) der Details des angegebenen (10) Objekts oder der Komponenten des Objekts auf Grundlage der Definitionen und Darstellen (45) eines Ergebnisses der Auswertung auf einem Bildschirm des Computers,
**gekennzeichnet dadurch, dass**
das Softwareprogrammprodukt ähnliche, dem angegebenen (10) Objekt entsprechende Objekte aus dem Abbild heraussucht und sammelt, wobei das Ergebnis für all die angegebenen Objekte als kombiniertes Ergebnis und/oder für jedes Objekt separat dargestellt wird.

2. Verfahren nach Anspruch 1, wobei das Angeben des Objekts durch Zeigen oder Klicken auf ein Symbol oder die Objektposition im Abbild erfolgt.

3. Verfahren nach Anspruch 1, wobei das Angeben des Objekts unter Anzeige seiner Position im Abbild durch Überfahren oder Anklicken mit der Computermaus erfolgt.

4. Verfahren nach einem der Ansprüche 1 bis 3, wobei das Objekt ein Teil oder die Gesamtheit des Bauvorhabens, wie ein Raum, ein Element oder ein Bauteil, ist.

5. Verfahren nach einem der Ansprüche 1 bis 4, wobei das für das Objekt oder seine Komponente auszuwertende Detail eine Information zu einer Abmessung, einer Fläche, einem Volumen, einer Menge, einer Anzahl, einer Länge und/oder einer Höhe für das Gesamtobjekt oder für eine Komponente des Objekts ist, wobei das Auswertungsergebnis ein Messergebnis und/oder ein Berechnungsergebnis umfasst.

6. Verfahren nach Anspruch 5, wobei das Ergebnis der Berechnungen Kosteninformationen umfasst, wie sie durch das Softwareprogrammprodukt oder durch ein anderes Programm auf Grundlage des Berechnungsergebnisses für die vom Softwareprogrammprodukt verarbeiteten Details berechnet werden.

7. Verfahren nach Anspruch 6, wobei die Kosteninformationen auf Grundlage der ausgewerteten Arbeitsstunden und anderer Arbeitskosten und möglicher weiterer Kosten berechnet werden.

8. Verfahren nach einem der Ansprüche 1 bis 7, wobei der Benutzer den Schritt des Angebens eines auszuwertenden Objekts für weitere unterschiedliche und/oder ähnliche Objekte im Abbild wiederholt, wodurch das Ergebnis für all die angegebenen (10) Objekte als kombiniertes Ergebnis sämtlicher Objekte und/oder für jedes Objekt separat dargestellt wird.

9. Verfahren nach einem der Ansprüche 1 bis 8, wobei das Softwareprogrammprodukt die gespeicherten Informationen der Definitionen ausschließlich auf Grundlage des angegebenen (10) Objekts aus der Datenbank abruft, wobei das Softwareprogrammprodukt das Abrufen der Definitionen auf Grundlage eines früheren Ereignisses gelernt und/oder trainiert hat, wobei die Definitionen an das Softwareprogrammprodukt übermittelt wurden.

10. Verfahren nach einem der Ansprüche 1 bis 9, wobei das Trainieren oder Lernen des Softwareprogramms bei jeder Verwendung des Verfahrens weiter stattfindet, wobei in diesem Zusammenhang auch aktualisierter Inhalt gelernt werden kann.

11. Verfahren nach einem der Ansprüche 1 bis 10, wobei das Softwareprogrammprodukt kontinuierlich Daten von Auswertungsereignissen sammelt und die Auswertungsergebnisse eines gegebenen Bauprodukts mit Ergebnissen ähnlicher Bauprodukte vergleicht und das Vergleichsergebnis zusammen mit dem Auswertungsergebnis für den Benutzer darstellt.

12. Verfahren nach einem der Ansprüche 1 bis 11, wobei das Softwareprogrammprodukt die das Objekt darstellenden Komponenten aus der Datenbank abruft, nachdem es das Objekt im Ergebnis einer Mustererkennung einer Linienart, eines Elements, eines Items, eines Symbols, eines Icons, einer Schrift, einer geometrischen oder anderen Form, eines Texts, eines Buchstaben, eines Worts, einer Zahl und/oder dergleichen und/oder einer Kombination oder eines Teils derselben erkannt hat.

13. Verfahren nach einem der Ansprüche 1 bis 12, wobei das Abbild eine Zeichnung sein und/oder als zweidimensionales, 2D, Bild konstruiert sein kann, wie als Computer-Aided-Design-, CAD, -Bild, eine DWG-Zeichnung, wie als DXF-Zeichnung, ein Portable-Document-Format-, PDF, - Bild, ein Graphics-Interchange-Format-, GIF, -Bild oder ein Joint-Photographic-Group-, JPG, - Bild.

14. Verfahren nach einem der Ansprüche 1 bis 13, wobei das Bild als ein dreidimensionales (3D) Bild konstruiert ist.

15. Verfahren nach Anspruch 13, wobei eine Höheninformation eines Objekts an das Softwareprogrammprodukt übermittelt wird, wenn das Bild als zweidimensionales (2D) Bild konstruiert ist.

16. Verfahren nach einem der Ansprüche 1 bis 15, wobei es sich beim Bauvorhaben um ein Gebäude, ein Bauelement oder eine elektrische Ausführung oder eine Ausführung der Heizungs-, Lüftungs- und Klimatisierungstechnik (HVAC) handelt.

17. Verfahren nach einem der Ansprüche 1 bis 16, wobei das Bauvorhaben ein Gebäude ist und es sich bei dem Objekt um eine Innenwand (1a, 1b, 1c, 1s, 1e, 1f), eine Außenwand (4), eine Tür (2, 2a, 2b, 2c, 2d), ein Fenster (3, 3a, 3b), einen Fußboden, eine Zimmerdecke, ein Dach, eine Fassade, ein Fundament oder ein Grundstück handelt.

18. Verfahren nach Anspruch 17, wobei das Objekt eine Innenwand ist und es sich bei den Komponenten um Materialschichten, Ständer, obere Abstützungen und untere Abstützungen handelt.

19. Verfahren nach Anspruch 17 oder 18, wobei zusätzliche Maßangaben an das Softwareprogrammprodukt übermittelt werden, wie Abmessungen von Abschnitten, die von den Materialberechnungen für eine Wand (1a, 1b, 1c, 1d, 1e, 1f, 4) aufgrund von Fenstern (3, 3a, 3b) oder Türen (2, 2a, 2b, 2c, 2d, 4) in einer Wand abzuziehen sind.

20. Verfahren nach einem der Ansprüche 1 bis 16, wobei das Bauvorhaben eine elektrische Ausführung in einem Gebäude ist, wobei es sich bei dem Objekt um ein Kabel (5), eine Steckdose (6a, 6b), einen Schalter, eine Leuchte, einen Elektroraum, einen Radiator, ein elektrisches Speisekabel handelt und die Komponenten Anschlussmittel umfassen.

21. Verfahren nach einem der Ansprüche 1 bis 16, wobei das Bauvorhaben eine Ausführung der Heizungs-, Lüftungs- und Klimatisierungstechnik (HVAC) ist, es sich bei dem Objekt um einen Lüftungskanal (9), ein Ventil (11a, 11b), ein Fallrohr, eine Toilettenschüssel, einen Wasserhahn, ein Waschbecken, ein Hauswasserrohr für warmes oder kaltes Wasser, ein Heizrohr oder ein Eckstück (12) handelt und die Komponente ein Befestigungsmittel ist.

22. Verfahren nach einem der Ansprüche 1 bis 21, wobei ausgewertete Objekte im Abbild durch das Softwareprogrammprodukt oder durch den Benutzer markiert (7, 7', 7", 8) werden.

23. Verfahren nach einem der Ansprüche 1 bis 22, wobei die Auswertungsschritte und Auswertungsergebnisse in der Datenbank oder in einer später zu untersuchenden anderen Datenbank abgespeichert werden.

24. Computerprogrammprodukt, das Anweisungen umfasst, die, wenn das Programm durch einen Computer ausgeführt wird, den Computer dazu veranlassen, das Verfahren nach einem der Ansprüche 1 bis 23 auszuführen.

## Revendications

1. Procédé mis en œuvre par ordinateur pour évaluer des détails pour un ou plusieurs objets d'un projet de construction moyennant un produit de programme logiciel exécuté par un ordinateur, ledit procédé comprenant les étapes consistant à :
a) définir un ou plusieurs composants qui constituent lesdits un ou plusieurs objets, lesdits composants de l'objet étant des objectifs de l'évaluation et lesdites définitions comprenant des informations de matériaux et des informations d'ensembles, les informations d'ensembles comprenant des relations dimensionnelles et d'autres informations, et les définitions étant stockées dans une base de données sous forme d'un ensemble de l'objet,
b) fournir une image du projet de construction, l'image illustrant lesdits un ou plusieurs objets, et entraîner le produit de programme logiciel pour qu'il puisse reconnaître un ou plusieurs objets indiqués sur l'image afin de récupérer les objectifs d'évaluation de l'objet dans la base de données,
c) entrer (41), par un utilisateur du produit de programme logiciel, l'image à lire par le produit de programme logiciel et communiquer l'échelle dimensionnelle de l'image au produit de programme logiciel,
d) indiquer (41), par l'utilisateur, un objet sur l'image pour l'évaluation des détails de l'objet ou de ses composants à évaluer par le produit de programme logiciel, et
e) récupérer (42, 43), par le produit de programme logiciel, les informations sur les composants d'un objet dans la base de données sur la base de l'ensemble stocké et évaluer (44) les détails de l'objet indiqué (10) ou de ses composants sur la base des définitions et afficher (45) un résultat de l'évaluation sur un écran de l'ordinateur,
**caractérisé en ce que**
le produit de programme logiciel détecte et collecte des objets similaires correspondant à l'objet indiqué (10) sur l'image, par quoi le résultat est affiché en tant que résultat combiné pour tous les objets indiqués et/ou séparément pour chaque objet.

2. Procédé selon la revendication 1, dans lequel l'objet est indiqué par pointage ou clic sur un symbole ou sur son emplacement sur l'image.

3. Procédé selon la revendication 1, dans lequel on indique l'objet en montrant son emplacement sur l'image par survol ou pointage à la souris de l'ordinateur.

4. Procédé selon l'une des revendications 1 à 3, dans lequel ledit objet est une partie ou l'intégralité du projet de construction, tel qu'un espace, un élément ou une pièce de construction.

5. Procédé selon l'une des revendications 1 à 4, dans lequel ledit détail à évaluer pour l'objet ou son composant est une information sur une dimension, une superficie, un volume, une quantité, un nombre, une longueur et/ou une hauteur pour l'objet entier ou pour un composant de l'objet, le résultat d'évaluation comprenant un résultat de mesure ou un résultat de calcul.

6. Procédé selon la revendication 5, dans lequel le résultat des calculs comprend des informations de coût telle qu'elles sont calculées par le produit de programme logiciel ou par un autre programme sur la base du résultat de calcul pour les détails effectués par le produit de programme logiciel.

7. Procédé selon la revendication 6, dans lequel les informations de coût sont calculées sur la base d'heures de travail évaluées et d'autres coûts de main-d'œuvre et d'autres coûts possibles.

8. Procédé selon l'une des revendications 1 à 7, dans lequel l'utilisateur répète l'étape consistant à indiquer un objet à évaluer pour d'autres objets différents et/ou similaires sur l'image, par quoi le résultat est affiché pour l'intégralité des objets indiqués (10) en tant que résultat combiné de tous les objets et/ou séparément pour chaque objet.

9. Procédé selon l'une des revendications 1 à 8, dans lequel le produit de programme logiciel récupère les informations stockées des définitions dans la base de données sur la base du seul objet indiqué (10), le produit de programme logiciel ayant appris et/ou entraîné la récupération des définitions sur la base d'un évènement antérieur, les définitions ayant été communiquées au produit de programme logiciel.

10. Procédé selon l'une des revendications 1 à 9, dans lequel l'entraînement ou l'apprentissage du programme logiciel continue d'avoir lieu lors de chaque utilisation du procédé, ce contexte permettant l'apprentissage de contenus actualisés.

11. Procédé selon l'une des revendications 1 à 10, dans lequel le produit de programme logiciel collecte en continu des données d'évènements d'évaluation et compare les résultats d'évaluation d'un produit de construction donné avec des résultats de produits de construction similaires et présente à l'utilisateur le résultat de comparaison ensemble avec le résultat d'évaluation.

12. Procédé selon l'une des revendications 1 à 11, dans lequel le produit de programme logiciel récupère dans la base de données les composants constituant l'objet après avoir reconnu l'objet comme résultat d'une reconnaissance de motifs d'un type de ligne, d'un élément, d'un item, d'un symbole, d'une icône, d'un police, d'une forme géométrique ou autre, d'un texte, d'une lettre, d'un mot, d'un chiffre et/ou similaire et/ou une combinaison ou partie quelconque de ceux-ci.

13. Procédé selon l'une des revendications 1 à 12, dans lequel l'image peut être un dessin et/ou construite comme une image bidimensionnelle, 2D, telle qu'une image Computer Aided Design, CAD, un dessin DWG, tel qu'un dessin DXF, une image Portable Document Format, PDF, une image Graphics Interchange Format, GIF, ou une image Joint Photographic Group, JPG.

14. Procédé selon l'une des revendications 1 à 13, dans lequel l'image est construite comme une image tridimensionnelle (3D).

15. Procédé selon la revendication 13, dans lequel une information de hauteur de l'objet est communiquée au produit de programme logiciel lorsque l'image est construite comme une image bidimensionnelle (2D).

16. Procédé selon l'une des revendications 1 à 15, dans lequel le projet de construction est un bâtiment, un élément de construction ou une réalisation électrique ou une réalisation de chauffage, ventilation et conditionnement d'air (CVCA).

17. Procédé selon l'une des revendications 1 à 16, dans lequel le projet de construction est un bâtiment, et l'objet est une paroi intérieure (1a, 1b, 1c, 1s, 1e, 1f), une paroi extérieure (4), une porte (2, 2a, 2b, 2c, 2d), une fenêtre (3, 3a, 3b), un plancher, un plafond, une toit, une façade, une fondation ou un terrain.

18. Procédé selon la revendication 17, dans lequel l'objet est une paroi intérieure et les composants sont des couches de matériaux, des montants, des supports supérieurs et des supports inférieurs.

19. Procédé selon la revendication 17 ou 18, dans lequel des informations dimensionnelles supplémentaires sont communiquées au produit de programme logiciel, telles que des dimensions de sections à déduire des calculs de matériau pour une paroi (1a, 1b, 1c, 1d, 1e, 1f, 4) à cause de fenêtres (3, 3a, 3b) ou de portes (2, 2a, 2b, 2c, 2d, 4) dans un mur.

20. Procédé selon l'une des revendications 1 à 16, dans lequel le projet de construction est une réalisation électrique dans un bâtiment, l'objet étant un câble (5), une prise (6a, 6b), un interrupteur, un luminaire, un local électrique, un radiateur, un câble d'alimentation électrique, et les composants étant des moyens de connexion.

21. Procédé selon l'une des revendications 1 à 16, dans lequel le projet de construction est une réalisation de chauffage, ventilation et conditionnement d'air (CVCA), l'objet est une gaine de ventilation (9), une vanne (11a, 11b), un tuyau de descente, une cuvette de WC, un robinet, un lavabo, une conduite d'eau domestique pour eau chaude ou froide, un tuyau de chauffage ou un raccord d'angle (12), et le composant est un moyen de fixation.

22. Procédé selon l'une des revendications 1 à 21, dans lequel des objets évalués sont marqués (7, 7', 7", 8) sur l'image par le produit de programme logiciel ou par l'utilisateur.

23. Procédé selon l'une des revendications 1 à 22, dans lequel les étapes et résultats d'évaluation sont stockés dans ladite base de données ou dans une autre base de données à étudier plus tard.

24. Produit de programme informatique comprenant des instructions qui, lorsque le programme est exécuté par un ordinateur, amènent l'ordinateur à effectuer le procédé selon l'une des revendications 1 à 23.
